# EUROPÄISCHE PATENTSCHRIFT

(11) **EP 2 826 126 B1**
(45) Veröffentlichungstag und Bekanntmachung des Hinweises auf die Patenterteilung: **03.10.2018**
(21) Anmeldenummer: 13707581.8
(22) Anmeldetag: 19.02.2013
(51) Int. Cl.: H02M 7/483, H02M 7/487

(54) **LEISTUNGSELEKTRONISCHE ANORDNUNG MIT SYMMETRIERUNG EINES SPANNUNGSKNOTENS IM ZWISCHENKREIS**
ELECTRONIC POWER ASSEMBLY HAVING BALANCING OF A VOLTAGE NODE IN THE INTERMEDIATE CIRCUIT
DISPOSITIF ÉLECTRONIQUE DE PUISSANCE COMPORTANT UNE SYMÉTRISATION D'UN N UD DE TENSION DANS LE CIRCUIT INTERMÉDIAIRE

(30) Priorität: 15.03.2012 DE 102012204108
(43) Veröffentlichungstag der Anmeldung: 21.01.2015
(73) Patentinhaber: SMA Solar Technology AG, 34266 Niestetal (DE)
(72) Erfinder: NEUBURGER, Martin, 73312 Geislingen (DE); SPANOS, Konstantin, 72218 Wildberg (DE); STEINBUCH, Hartmut, 72585 Riederich (DE); PLUM, Thomas, 70197 Stuttgart (DE)
(74) Vertreter: Lahnor, Peter
(86) Internationale Anmeldenummer: PCT/EP2013/053280
(87) Internationale Veröffentlichungsnummer: WO 2013/135464

(56) Entgegenhaltungen:
- EP-A1- 2 259 420
- WO-A1-2011/091919
- WO-A2-2011/147751
- US-A1- 2011 227 422

## Beschreibung

Die Erfindung betrifft einen Wechselrichter mit Symmetrierung eines Spannungsknotens im Zwischenkreis.

### Stand der Technik

Die Aufgabe von Wechselrichtern besteht in einer Energiewandlung, bei welcher aus einer Gleichspannungsquelle Energie entnommen und mit hohem Wirkungsgrad einer Senke mit periodisch wechselnder Spannung zugeführt wird.

Insbesondere im Bereich der erneuerbaren Energien, beispielsweise bei Photovoltaik-Invertern, haben sich Realisierungen in Form von Multi-Level-Topologien etabliert. Derartige Wechselrichter benötigen zur Energiespeicherung einen Zwischenkreis mit mindestens zwei in Reihe geschalteten Kondensatoren. Diese Kondensatoren werden in der Regel aus einer Gleichspannungsquelle in serieller Weise mit Energie versorgt. Dies hat zur Folge, dass die Spannungsknoten, die am Verbindungspunkt zwischen jeweils zwei der Kondensatoren vorliegen, empfindlich auf eingeprägte Gleichspannungs-Stromanteile bzw. eine Belastung der einzelnen Kondensatoren mit unterschiedlichen Leistungen reagieren.

Unsymmetrien im Ausgangswechselstrom, die beispielsweise durch Unsymmetrien der Regelung, Unsymmetrien der Last, etc., hervorgerufen werden können, führen zu geringen Gleichanteilen an diesen Spannungsknoten. Eine weitere Ursache für Unsymmetrien in der Leistungsentnahme der einzelnen ZwischenkreisKondensatoren besteht in Parameterdifferenzen der Zwischenkreiskondensatoren, wodurch insbesondere unterschiedliche Leckströme hervorgerufen werden können, und in Parameterdifferenzen der Halbleiterbauteile des Wechselrichters.

Zu diesen letzteren Parameterdifferenzen zählen insbesondere Differenzen in der Durchlassspannung sowie unterschiedliche Schaltverluste. Durch diese wird selbst im Falle einer idealen symmetrischen Leistungsabgabe des Wechselrichters die Leistungsentnahme aus den einzelnen Zwischenkreiskondensatoren geringe Differenzen aufweisen.

Alle diese Gleichanteile und die dadurch verursachten Spannungsverschiebungen an den Spannungsknoten integrieren sich über die Betriebszeit auf und führen dazu, dass eine ordnungsgemäße Funktionsweise des Wechselrichters nicht mehr gewährleistet werden kann.

Folglich wird eine Symmetrierung derart benötigt, dass der oder die Spannungsknoten auf einer konstanten Spannung gehalten werden.

Eine Möglichkeit einer Konstanthaltung der Spannung an den Spannungsknoten besteht darin, parallel zu den Zwischenkreiskondensatoren jeweils einen hochohmigen Widerstand zu schalten. Dieser hochohmiger Widerstand homogenisiert vorliegende Spannungsungleichgewichte über die Ableitströme. Ein Nachteil dieser Vorgehensweise besteht im Auftreten einer permanenten Verlustleistung. Dabei wird in unerwünschter Weise allen Zwischenkreiskondensatoren Energie entnommen und in Wärme umgesetzt. Dies reduziert den Wirkungsgrad des Wechselrichters. Zudem ist die symmetrierende Wirkung nur vergleichsweise schwach.

Eine weitere Möglichkeit einer Konstanthaltung der Spannung an den Spannungsknoten besteht darin, parallel zu den Zwischenkreiskondensatoren jeweils einen hochohmigen Widerstand zu schalten, diesem Widerstand einen Transistor oder einen anderen geeigneten Halbleiter in Serie zu schalten und diesen Transistor bzw. Halbleiter so anzusteuern, dass nur in dem Zweig Strom fließt, in dem sich die anliegende Spannung durch eine zu geringe Leistungsentnahme erhöht. Im Falle einer geeignet ausgeführten Ansteuerung des genannten Transistors bzw. Halbleiters kann auf den genannten hochohmigen Widerstand möglicherweise sogar verzichtet werden. Bei dieser Vorgehensweise wird gegenüber der erstgenannten Möglichkeit der Energieverbrauch verringert, da nur dem bzw. den Zwischenkreiskondensatoren, an welchem bzw. welchen zu hohe Spannungswerte anliegen, Ladung entnommen wird. Der unerwünschte Effekt, dass die auftretenden Energiedifferenzen in Wärme umgesetzt und nicht genutzt werden, bleibt jedoch erhalten.

Aus der DE 10 2004 038 534 A1 ist ein Spannungsteiler für Gleichspannungszwischenkreise in Antriebssystemen bekannt, welcher eine zwischen den Potentialen einer Betriebsspannungsquelle angeordnete Reihenschaltung von Kapazitäten mit Mittelabgriff zwischen zwei Kapazitäten und einem Steuerpotential am Mittelabgriff aufweist. Des Weiteren sind zwischen den Potentialen der Betriebsspannungsquelle zwei in Reihe geschaltete Transistoren entgegengesetzten Leitungstyps mit verbundenen Steuereingängen angeordnet, wobei sich zwischen den Leitungstypen ein Mittelabgriff befindet. Parallel zu einem Leitungstyp ist jeweils eine Kapazität geschaltet, indem eine elektrisch leitende Verbindung zwischen dem Mittelabgriff der Leitungstypen und dem Mittelabgriff der Kapazitäten besteht. Die Leitungstypen sind so angeordnet, dass ein elektrischer Strom im ersten Leitungstyp den parallel zum zweiten Leitungstyp geschalteten Kondensator lädt und ein elektrischer Strom im zweiten Leitungstyp den parallel zum ersten Leitungstyp geschalteten Kondensator lädt. Die Steuereingänge werden mittels eines aus der Betriebsspanungsquelle abgeleiteten Steuerpotentials angesteuert.

Bei der in EP 2 259 420 A1, offenbarten Anordnung handelt es sich um eine klassische Spannungsregelung. Hierbei muss die Schaltungsanordnung die gesamte Eingangsleistung des Wechselrichters regeln und ist dementsprechend aufwendig.

WO 2011/147751 A2 offenbart eine Symmetrierungsschaltung dessen Gleichstromsteller als Hochsetzsteller ausgeführt sind.

Bei der in US 2011/227422 A1 gezeigten Anordnung handelt es sich um eine Spannungsregelung, die ebenfalls in paralleler Anordnung ausgeführt ist. Ein vorhandenes Schaltnetzteil ist jedoch nicht nutzbringend in die Symmetrierungsstruktur eingebunden. Deshalb muss der dort gezeigte Gleichstromsteller für bidirektionale Leistungsflüsse ausgelegt sein und ist damit aufwendig. Eine noch weitere Möglichkeit einer Konstanthaltung der Spannung an den Spannungsknoten besteht darin, einen Zwischenkreiskondensator, der eine zu hohe Spannung aufweist, über die Last bzw. das Netz durch eine Einspeisung eines kleinen Gleichspannungs-Stromanteils im Ausgangsstrom des Wechselrichters zu entladen. Ein solcher Regeleingriff ist seitens der Netzbetreiber jedoch unerwünscht und auch durch normative Vorgaben stark eingeschränkt.

Auch bei anderen Lasten kann es bei einem solchen Regeleingriff zu Problemen kommen. Zudem kann bei dieser noch weiteren Möglichkeit der Symmetrierungsvorgang nur während der Netzeinspeisung/Leistungsabgabe durchgeführt werden. Da diese nicht immer gewährleistet ist, eine Symmetrierung aber unter Umständen permanent erforderlich ist, ist es zusätzlich zu diesem Regeleingriff noch notwendig, die oben beschriebene Parallelschaltung jeweils eines hochohmigen Widerstandes zu den Zwischenkreiskondensatoren oder die oben beschriebene weitere Möglichkeit einzusetzen.

Darüber hinaus besteht die Möglichkeit, zum Zwecke einer Konstanthaltung der Spannung an den Spannungsknoten eine Versorgung der Auswerteelektronik, der Digitalelektronik bzw. von Zusatzverbrauchern über unsymmetrische Leistungsanteile vorzunehmen. Ziel dieses Ansatzes ist es, die auftretenden unsymmetrischen Leistungen für die ohnehin notwendige Versorgung der Regel-, Steuer- und Digitalelektronik oder für Zusatzverbraucher zu nutzen. Dadurch entstehen keine zusätzlichen Systemverluste und der System-Wirkungsgrad wird nicht verringert.

Hierzu werden mehrere Schaltnetzteile eingesetzt, die jeweils aus einem einzelnen der Zwischenkreiskondensatoren mit Energie versorgt werden. Die Leistung der Schaltnetzteile wird derart geregelt, dass die Spannung am jeweiligen Spannungsknoten konstant bleibt. Da die Schaltnetzteile in der Regel bei anliegender Spannung selbstständig anlaufen, bedarf es keiner zusätzlichen Verwendung der oben beschriebenen weiteren Möglichkeit. Mittels dieser Möglichkeit kann zwar die Spannung an den Spannungsknoten konstant gehalten werden, doch ist bei dieser Möglichkeit für alle Schaltnetzteile eine potentialgetrennte Ausführung notwendig. Dies bedeutet einen hohen Schaltungsaufwand und verursacht vergleichsweise hohe Kosten.

### Offenbarung der Erfindung

Ein Wechselrichter, mit den im Anspruch 1 angegebenen Merkmalen weist demgegenüber den Vorteil auf, dass die gewünschte Symmetrierung eines Spannungsknotens verlustarm, mit reduziertem Schaltungsaufwand und kostengünstig erreicht wird, wobei die Energie von auftretenden Unsymmetrien genutzt wird. Dies wird dadurch erreicht, dass eine leistungselektronische Anordnung, welche einen Zwischenkreis mit zwei in Reihe geschalteten Kondensatoren aufweist, zwischen denen sich ein Spannungsknoten befindet, wobei einem der Kondensatoren des Zwischenkreises ein Schaltnetzteil parallel geschaltet ist, des Weiteren einen mit den beiden Kondensatoren verbundenen, einen Energieausgleich zwischen den beiden Kondensatoren herbeiführenden Gleichspannungssteller aufweist. Bei diesem Gleichspannungssteller kann es sich zum Beispiel um einen Tiefsetzsteller oder um einen Hochsetzsteller handeln.

Mittels einer leistungselektronischen Anordnung gemäß der Erfindung wird eine kostengünstige und verlustarme Symmetrierung und eine einfache Regelung erreicht, wobei nur ein einziges potentialtrennendes Schaltnetzteil benötigt wird. Der Wirkungsgrad der leistungselektronischen Anordnung ist im Vergleich zu bekannten Lösungen verbessert.

Weitere vorteilhafte Eigenschaften der Erfindung ergeben sich aus deren nachfolgender Erläuterung anhand der Zeichnung. Es zeigt
- Figur 1: eine Skizze des schematischen Aufbaus einer 3-Level-Wechselrichter-Topologie in Form eines Brückenzweiges mit Freilauf,
- Figur 2: eine Skizze zur Veranschaulichung eines Ausführungsbeispiel für eine bekannte Vorrichtung zur Symmetrierung eines Spannungsknotens des Zwischenkreises eines Wechselrichters,
- Figur 3: eine Skizze zur Veranschaulichung eines ersten Ausführungsbeispiel für die Erfindung und
- Figur 4: eine Skizze zur Veranschaulichung eines zweiten Ausführungsbeispiel für die Erfindung.

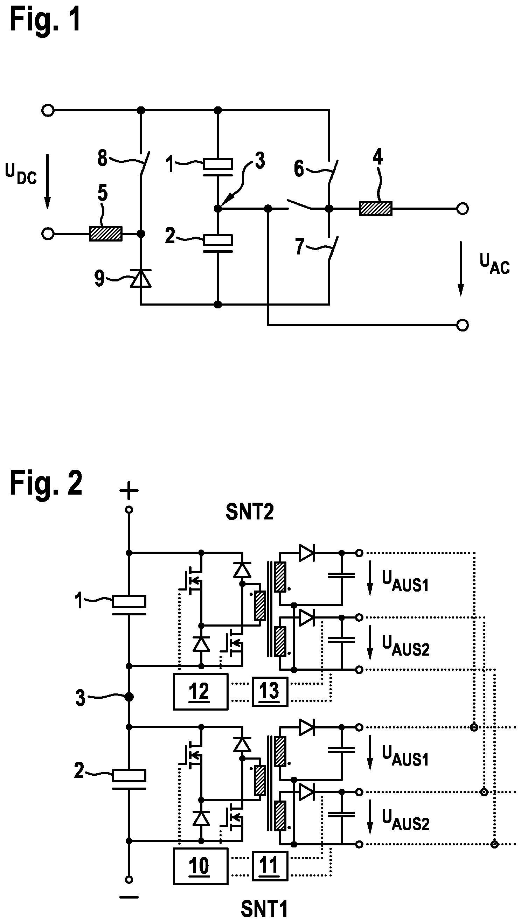

Die Erfindung betrifft eine leistungselektronische Anordnung, beispielsweise einen Wechselrichter, welche einen Zwischenkreis mit zwei oder mehr in Reihe geschalteten Kondensatoren aufweist, zwischen denen sich jeweils ein Spannungsknoten befindet. Nachfolgend wird die Erfindung an Hand eines Wechselrichters erläutert, bei welchem es sich um ein Ausführungsbeispiel der leistungselektronischen Anordnung handelt. Ein Beispiel für den schematischen Aufbau einer 3-Level-Wechselrichter-Topologie in Form eines Brückenzweiges mit Freilauf ist in der Figur 1 dargestellt.

Die in der Figur 1 gezeigte Vorrichtung weist einen Zwischenkreis auf, welcher zwei in Reihe geschaltete Kondensatoren 1 und 2 aufweist. Zwischen diesen beiden Kondensatoren befindet sich ein Spannungsknoten 3. Bei den Kondensatoren 1 und 2 handelt es sich um zur Speicherung von Energie vorgesehene Zwischenkreiskondensatoren. Des Weiteren weist die in der Figur 1 gezeigte Vorrichtung Drosseln 4 und 5 auf, die als elektromagnetische Energiespeicher dienen. Ferner sind Schalter 6, 7 und 8 vorgesehen, bei denen es sich um Halbleiterschalter, vorzugsweise Feldeffekttransistoren, handelt. Des Weiteren weist die gezeigte Vorrichtung eine als Gleichrichter wirkende Diode 9 auf.

Am Eingang der gezeigten Vorrichtung liegt eine Gleichspannung U_{DC} an. Am Ausgang der Vorrichtung wird eine Wechselspannung U_{AC} bereitgestellt.

Ziel der vorliegenden Erfindung ist es, einen dauerhaften Betrieb der Vorrichtung zu gewährleisten, wobei das Spannungspotential am Spannungsknoten 3 innerhalb vorgegebener Grenzen bleibt und nicht in Richtung positiver oder negativer Spannungen wegläuft.

In der Figur 2 ist eine Skizze zur Veranschaulichung eines Ausführungsbeispiels für eine bekannte, bereits oben beschriebene Vorrichtung zur Symmetrierung eines Spannungsknotens 3 des Zwischenkreises eines Wechselrichters dargestellt. Der Spannungsknoten 3 ist zwischen zwei Zwischenkreiskondensatoren 1 und 2 vorgesehen. Der Zwischenkreiskondensator 1 ist zwischen dem positiven Potential + einer nicht gezeichneten Gleichspannungsquelle und dem Spannungsknoten 3 angeordnet. Der Zwischenkreiskondensator 2 ist zwischen dem Spannungsknoten 3 und dem negativen Potential - der nicht gezeichneten Gleichspannungsquelle angeordnet.

Parallel zum Zwischenkreiskondensator 1 ist ein Schaltnetzteil SNT2 geschaltet, dessen Primärseite von einem Regel-IC 12 angesteuert wird und dessen Sekundärseite mit dem Regel-IC 12 über einen Optokoppler 13 in Verbindung steht. Die Sekundärseite des Schaltnetzteils SNT2 weist beispielhaft zwei Wicklungen und zwei Ausgangsspannungen auf, von denen die obere über eine Diode mit einem Ausgangskondensator verbunden ist, an welchem eine Ausgangsspannung U_{AUS1} abgreifbar ist. Die untere der beiden Wicklungen ist über eine weitere Diode mit einem weiteren Ausgangskondensator verbunden, an welchem eine Ausgangsspannung U_{AUS2} abgreifbar ist.

Parallel zum Zwischenkreiskondensator 2 ist ein Schaltnetzteil SNT1 geschaltet, dessen Primärseite von einem Regel-IC 10 angesteuert wird und dessen Sekundärseite mit dem Regel-IC 10 über einen Optokoppler 11 in Verbindung steht. Die Sekundärseite des Schaltnetzteils SNT1 weist zwei Wicklungen auf, von denen die obere über eine Diode mit einem Ausgangskondensator verbunden ist, an welchem die Ausgangsspannung U_{AUS1} abgreifbar ist. Die untere der beiden Wicklungen ist über eine Diode mit einem zweiten Ausgangskondensator verbunden, an welchem die Ausgangsspannung U_{AUS2} abgreifbar ist.

Bei dieser bekannten Ausführungsform müssen beide eingesetzten Schaltnetzteile für alle im System benötigten Spannungen einen Ausgang besitzen.

Bei diesem Ausführungsbeispiel wird das Schaltnetzteil SNT2 aus dem Zwischenkreiskondensator 1 mit Energie versorgt. Das Schaltnetzteil SNT1 wird aus dem Zwischenkreiskondensator 2 mit Energie versorgt. Die Regelung der Schaltnetzteile SNT1 und SNT2 erfolgt dabei derart, dass die Spannung am Spannungsknoten 3 konstant bleibt. Da bei diesem Ausführungsbeispiel für beide Schaltnetzteile eine potentialgetrennte Ausführung notwendig ist, verursacht eine Realisierung einen hohen Schaltungs- und Kostenaufwand. Dies gilt erst recht dann, wenn der Zwischenkreis mehr als zwei in Reihe geschaltete Kondensatoren aufweist.

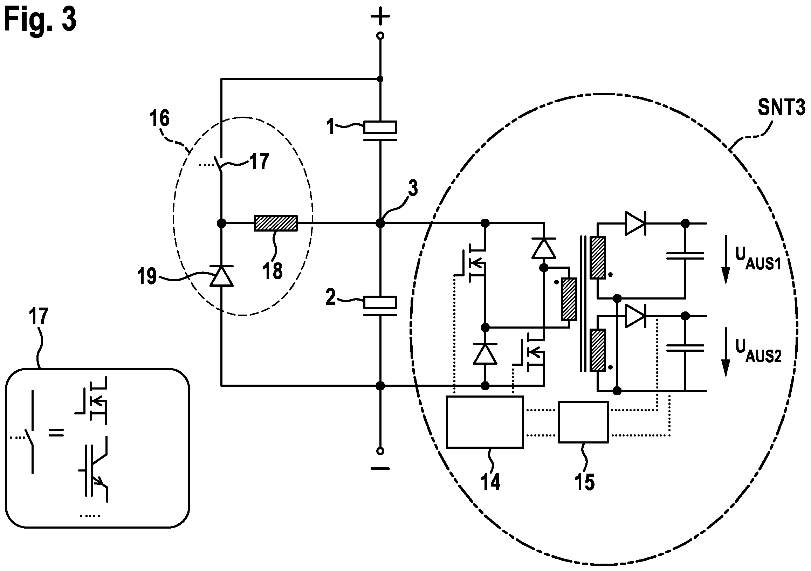

Die Figur 3 zeigt eine Skizze zur Veranschaulichung eines ersten Ausführungsbeispiels für die Erfindung, bei welcher der vorstehend beschriebene hohe Schaltungs- und Kostenaufwand reduziert ist und der erforderliche Energieausgleich zwischen den beiden Zwischenkreiskondensatoren mit einem erheblich einfacheren und kostengünstigeren potentialverbindenden Gleichspannungssteller realisiert ist.

Bei diesem ersten Ausführungsbeispiel ist ein Zweig eines 3-Level-Wechselrichters mit zwei in Reihe geschalteten Zwischenkreiskondensatoren 1 und 2 vorgesehen, zwischen denen sich ein Spannungsknoten 3 befindet. Der Zwischenkreiskondensator 1 ist zwischen dem positiven Potential + einer nicht gezeichneten Gleichspannungsquelle und dem Spannungsknoten 3 angeordnet. Der Zwischenkreiskondensator 2 ist zwischen dem Spannungsknoten 3 und dem negativen Potential - der nicht gezeichneten Gleichspannungsquelle angeordnet.

Parallel zum Zwischenkreiskondensator 2 ist ein Schaltnetzteil SNT3 geschaltet, dessen Primärseite von einem Regel-IC 14 angesteuert wird und dessen Sekundärseite mit dem Regel-IC 14 über einen Optokoppler 15 in Verbindung steht. Die Sekundärseite des Schaltnetzteils SNT3 weist beispielhaft zwei Wicklungen auf, von denen die obere über eine Diode mit einem Ausgangskondensator verbunden ist, an welchem die Ausgangsspannung U_{AUS1} abgreifbar ist. Die untere der beiden Wicklungen ist über eine weitere Diode mit einem zweiten Ausgangskondensator verbunden, an welchem die Ausgangsspannung U_{AUS2} abgreifbar ist.

Des Weiteren ist bei diesem ersten Ausführungsbeispiel ein von den Zwischenkreiskondensatoren 1 und 2 nicht potentialgetrennter Gleichspannungssteller 16 vorgesehen, bei dem es sich um einen Tiefsetzsteller handelt. Dieser Tiefsetzsteller weist einen Schalter 17, eine Drossel 18 und eine Diode 19 auf. Der Schalter 17 ist vorzugsweise als Halbleiterschalter realisiert und wird so angesteuert, dass das Potenzial des Knotens 3 im gewünschten Bereich verbleibt. Ein Anschluss des Schalters 17 ist mit dem positiven Bezugspotential + verbunden, der andere Anschluss des Schalters 17 ist an einen Anschluss der Drossel 18 und die Kathode der Diode 19 angeschlossen. Der andere Anschluss der Drossel 18 ist mit dem Spannungsknoten 3 verbunden. Die Anode der Diode 19 ist an das negative Bezugspotential - angeschlossen.

Die Energieversorgung des Schaltnetzteils SNT3 erfolgt aus dem Zwischenkreiskondensator 2, d. h. aus dem Zwischenkreiskondensator mit dem geringeren Potential.

Der nicht potentialgetrennte Gleichspannungssteller 16 hat im Normalbetrieb bei symmetrischer Belastung die Aufgabe, die halbe Energie der notwendigen Versorgungsleistung der verbleibenden Steuerelektronik aus dem oberen Zwischenkreiskondensator 1 zu entnehmen und dem unteren Zwischenkreiskondensator 2 zuzuführen. Da die zweite Hälfte der notwendigen Versorgungsleistung dem unteren Zwischenkreiskondensator 2 entnommen wird, stellt sich ein symmetrischer Arbeitspunkt ein und der Betrieb des Wechselrichters kann in üblicher Weise ablaufen.

Im Falle einer unsymmetrischen Ansteuerung, beispielsweise durch einen Regelungsfehler, ein unsymmetrisches Netz, Bauteiletoleranzen, usw., wird die Leistung des Gleichspannungsstellers derart geregelt oder gesteuert, dass die Spannungen wieder auf ihre Nennwerte gebracht werden.

Die Realisierung der Regelung für einen benötigten Spannungsausgleich beschränkt sich auf nur einen Gleichspannungssteller und hat als Regelgröße lediglich die Spannung am genannten Spannungsknoten 3. Diese Regelung ist deshalb wesentlich einfacher auszuführen als eine parallele Ansteuerung zweier Schaltnetzteile, wie sie bei der in der Figur 2 gezeigten Vorrichtung benötigt wird.

Da bei dem in der Figur 3 gezeigten ersten Ausführungsbeispiel für die Erfindung die interne Spannungsversorgung ausschließlich dem unteren Zwischenkreiskondensator 2 entnommen wird, im ungünstigsten Fall aber komplett vom oberen Zwischenkreiskondensator zur Verfügung gestellt werden muss, muss der Gleichspannungssteller 16 im Hinblick auf seine Leistungsfähigkeit auf die komplette Leistung dimensioniert werden. Im Unterschied zu der in der Figur 2 gezeigten Ausführung ist jedoch keine Potentialtrennung notwendig. Dieser Umstand erlaubt es, das in der Figur 2 gezeigte obere Schaltnetzteil SNT2 durch einen einfachen Tiefsetzsteller zu ersetzen. Durch die dadurch entstehende wesentlich vereinfachte Topologie und den Ersatz eines Transformators durch eine kostengünstige Drossel ergeben sich auch reduzierte Verluste und reduzierte Kosten.

Ist das Schaltnetzteil parallel zum unteren Zwischenkreiskondensator geschaltet, dann kann aufgrund der Ankopplung des Schaltnetzteils an den negativsten Spannungspunkt in der Topologie ggf. die Potentialtrennung weggelassen werden. In diesem Fall sind gegebenenfalls auch die Treiberschaltungen für die Halbleiterschalter potentialfrei ausführbar.

Gemäß einer Alternative zum ersten Ausführungsbeispiel kann das Schaltnetzteil statt am unteren Zwischenkreiskondensator 2 auch parallel zum oberen Zwischenkreiskondensator 1 angeordnet sein. In diesem Fall wird als Gleichspannungssteller ein Hochsetzsteller verwendet, der aus dem unteren Zwischenkreiskondensator 2 mit Energie versorgt wird. Die oben beschriebenen Vorteile des ersten Ausführungsbeispiels bleiben erhalten.

Die Erfindung kann des weiteren auch bei Multilevel-Topologien mit mehr als zwei in Serie geschalteten Zwischenkreiskondensatoren verwendet werden. In diesem Falle ist für jeden Zwischenkreiskondensator mit Ausnahme des Zwischenkreiskondensators, an welchen das Schaltnetzteil angeschlossen ist, ein Gleichspannungssteller derart angeschlossen, dass ein eventueller Energieüberschuss jenem Zwischenkreiskondensator zugeführt wird, dessen Potential dem Schaltnetzteil eine Stufe näher liegt. Das Schaltnetzteil muss nicht, kann aber zweckmäßigerweise an einen der beiden äußeren Zwischenkreiskondensatoren angeschlossen werden, d. h. entweder an den Zwischenkreiskondensator mit dem höchsten Potential oder an den Zwischenkreiskondensator mit dem niedrigsten Potential.

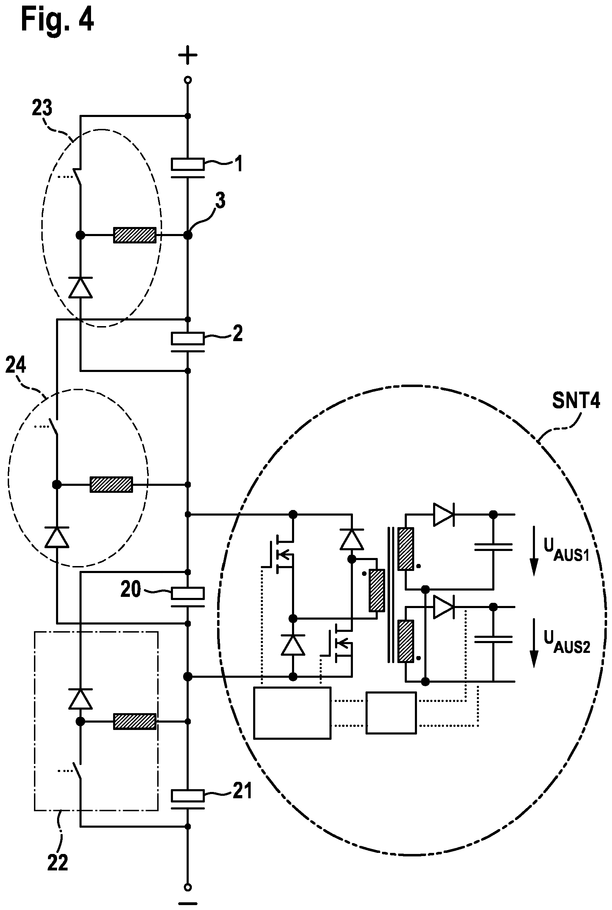

Die Figur 4 zeigt eine Skizze zur Veranschaulichung eines zweiten Ausführungsbeispiels für die Erfindung. Bei diesem zweiten Ausführungsbeispiel weist der Zwischenkreis vier zueinander in Reihe geschaltete Zwischenkreiskondensatoren 1, 2, 20 und 21 auf. Das Schaltnetzteil SNT4 ist bei diesem zweiten Ausführungsbeispiel an den Zwischenkreiskondensator 20 angeschlossen bzw. parallel zu diesem angeordnet. Der Zwischenkreiskondensator 20 ist beim gezeigten Ausführungsbeispiel der Zwischenkreiskondensator mit dem zweitniedrigsten Potential. Ein Hochsetzsteller 22 am untersten Zwischenkreiskondensator 21 leitet Energieüberschüsse in den darüber liegenden Zwischenkreiskondensator 20 weiter. Bei den Zwischenkreiskondensatoren 1 und 2, die im Vergleich zum Zwischenkreiskondensator 30 ein höheres Potential aufweisen, leitet jeweils ein Tiefsetzsteller 23 bzw. 24 überschüssige Energie dem jeweils benachbarten Zwischenkreiskondensator mit dem nächst niedrigeren Potential zu, so dass auch in diesem Falle schließlich die Energie an den Anschlüssen des Schaltnetzteils zur Verfügung steht.

Bei dieser Anordnung kann die Ansteuerung aller Gleichspannungssteller zentral durch eine Steuereinheit erfolgen, die die notwendigen Energieflüsse aus einem Vergleich der Spannungen aller Zwischenkreiskondensatoren ableitet und die einzelnen Halbleiterschalter der jeweiligen Gleichspannungssteller entsprechend ansteuert.

Alternativ hierzu kann jedoch jeder der vorliegenden Gleichspannungssteller getrennt angesteuert werden, indem nur das Potenzial des gemeinsamen Knotens der beiden Zwischenkreiskondensatoren, mit denen dieser Gleichspannungssteller verbunden ist, für die Steuerung verwendet wird. Hierdurch ergibt sich eine paarweise Symmetrie der Kondensatorspannungen und damit in Folge durch die gewählte Anordnung der Gleichspannungssteller auch eine Symmetrisierung der Spannungen über alle Zwischenkreiskondensatoren. Mit dieser Ausprägung kann eine einfache und vorteilhafte Ausführung erreicht werden.

Sollte für die nachfolgende leistungselektronische Anordnung eine betragsmäßige Gleichheit der Einzelkondensatorspannungen unzweckmäßig sein, kann mit dieser Erfindung auch ein bewusste gewähltes Spannungsverhältnis der Einzelkondensatoren erreicht werden.

Gemäß weiterer, nicht in den Figuren dargestellter Ausführungsbeispiele ist auch ein Anschluss des Schaltnetzteils an einen anderen Zwischenkreiskondensator möglich.

Ferner ist die Erfindung auch verwendbar, wenn der vorliegende Zwischenkreis eine von zwei bzw. vier abweichende Anzahl von in Reihe geschalteten Zwischenkreiskondensatoren aufweist.

Es gelten allgemein die folgenden Beziehungen:
k ≥ 2 und n = k - 1,
wobei k die Anzahl der Zwischenkreiskondensatoren und n die Anzahl der Gleichspannungssteller ist.

## Patentansprüche

1. Wechselrichter, welcher einen Zwischenkreis mit zwei in Reihe geschalteten Kondensatoren (1,2) aufweist, zwischen denen sich ein Spannungsknoten befindet, wobei einem der Kondensatoren (1,2) des Zwischenkreises ein potentialtrennendes Schaltnetzteil (SNT3)
zur Versorgung einer Steuerelektronik des Wechselrichters parallel geschaltet ist, und wobei der Wechselrichter des Weiteren einen mit den beiden Kondensatoren (1,2) und dem Spannungsknoten (3) verbundenen, einen Energieausgleich zwischen den beiden Kondensatoren (1,2) herbeiführenden Gleichspannungssteller (16) aufweist, wobei der Gleichspannungssteller (16) eine Reihenschaltung aus einem Schalter (17) und einer Diode (19) sowie eine Drossel (18) aufweist, wobei
die Endpunkte der Reihenschaltung mit den Endpunkten der in Reihe geschalteten Kondensatoren (1,2) verbunden sind,
ein Anschluss der Drossel (18) mit dem Spannungsknoten (3) verbunden ist und der andere Anschluss der Drossel (18) an den Verbindungspunkt zwischen dem Schalter (17) und der Diode (19) angeschlossen ist,
**dadurch gekennzeichnet, dass** die Ansteuerung des Gleichspannungsstellers (16) derart erfolgt, dass er im Normalbetrieb bei symmetrischer Belastung die halbe Energie einer notwendigen Versorgungsleistung der Steuerelektronik einem der Kondensatoren (1,2) entnimmt und dem anderen der Kondensatoren (1,2), aus dem das Schaltnetzteil (SNT3) versorgt wird, zuführt und im Falle einer asymmetrischen Ansteuerung die an den Kondensatoren (1,2) anliegenden Spannungen auf ihre Nennwerte bringt.

2. Wechselrichter nach Anspruch 1, **dadurch gekennzeichnet, dass** der Schalter (17) ein Halbleiterschalter ist.

3. Wechselrichter nach einem der vorhergehenden Ansprüche, **dadurch gekennzeichnet, dass** der Zwischenkreis k Zwischenkreiskondensatoren und n Gleichspannungssteller aufweist, wobei gilt: k ≥ 2 und n = k - 1.

4. Wechselrichter nach Anspruch 3, **dadurch gekennzeichnet, dass** alle Gleichspannungssteller aus einer zentralen Einheit angesteuert werden, die die Ansteuerbefehle aus der Verrechnung aller im System vorliegenden Einzelspannungen der Zwischenkreiskondensatoren bestimmt.

5. Wechselrichter nach Anspruch 3, **dadurch gekennzeichnet, dass** die Ansteuerbefehle jedes Gleichspannungsstellers einzeln aus dem Potenzial des gemeinsamen Knotens der beiden Zwischenkreiskondensatoren, mit denen er in Verbindung steht, bestimmt werden.

## Claims

1. Inverter comprising an intermediate circuit with two capacitors (1,2) connected in series, between which there is a voltage node, wherein one of the capacitors (1,2) of the intermediate circuit is connected in parallel with a galvanically isolating switched-mode power supply (SNT3) for feeding a control circuit of the inverter, and wherein the inverter further comprises a direct voltage converter (16) which is connected to both capacitors (1,2) and the voltage node (3) and which effects an energy balancing between the two capacitors (1,2), wherein the direct current converter (16) comprises a series circuit comprising a switch (17), a diode (19) and a choke (18), wherein the end points of each of said series circuit are connected serially to the two capacitors (1,2) connected in series, a terminal of the choke (18) is connected to the voltage node (3), and the other terminal of the choke (18) is connected to a connection point between the switch (17) and the diode (19), **characterized in that**
a control of the direct voltage converter (16) is configured such that, during normal operation with symmetrical load, half of the energy required for feeding the control circuit is taken from one of the capacitors (1,2) and routed into the other capacitor (1,2) from which the switched-mode power supply (SNT3) is fed, and such that, in case of an asymmetrical control, it drives the voltages at the two capacitors (1,2) towards their nominal values.

2. Inverter according to claim 1, **characterized in that** the switch (17) is a semiconductor switch.

3. Inverter according to one of the previous claims, **characterized in that** the intermediate circuit comprises k intermediate circuit capacitors and n direct voltage converters, wherein k ≥ 2 and n=k-1.

4. Inverter according to claim 3, **characterized in that** all direct voltage converters are controlled by a central unit which derives control commands based on the accounting of all individual voltages of the intermediate circuit capacitors within the system.

5. Inverter according to claim 3, **characterized in that** the control commands of each direct voltage converter are derived from the potential of the common node of those two capacitors the particular direct voltage converter is connected to.

## Revendications

1. Onduleur, qui possède un circuit intermédiaire comprenant deux condensateurs (1, 2) branchés en série et entre lesquels se trouve un noeud de tension, un bloc d'alimentation à découpage (SNT3) d'isolation des potentiels destiné à alimenter une électronique de commande de l'onduleur étant branché en parallèle avec l'un des condensateurs (1, 2) du circuit intermédiaire, et l'onduleur possédant en outre un élément de réglage de tension continue (16) relié à l'un des deux condensateurs (1, 2) et au noeud de tension (3) et produisant un équilibrage d'énergie entre les deux condensateurs (1, 2),
l'élément de réglage de tension continue (16) possédant un circuit série composé d'un commutateur (17) et d'une diode (19) ainsi que d'une bobine (18),
les points d'extrémité du circuit série étant reliés aux points d'extrémité des condensateurs (1, 2) branchés en série,
une borne de la bobine (18) étant reliée au noeud de tension (3) et
l'autre borne de la bobine (18) étant raccordée au point de liaison entre le commutateur (17) et la diode (19),
**caractérisé en ce que** le pilotage de l'élément de réglage de tension continue (16) est effectué de telle sorte qu'en fonctionnement normal en présence d'une charge symétrique, il prélève la moitié de l'énergie d'une puissance d'alimentation nécessaire pour l'électronique de commande de l'un des condensateurs (1, 2) et l'achemine à l'autre des condensateurs (1, 2), depuis lequel est alimenté le bloc d'alimentation à découpage (SNT3), et dans le cas d'un pilotage asymétrique, amène les tensions présentes aux bornes des condensateurs (1, 2) à leurs valeurs nominales.

2. Onduleur selon la revendication 1, **caractérisé en ce que** le commutateur (17) est un commutateur à semiconducteur.

3. Onduleur selon l'une des revendications précédentes, **caractérisé en ce que** le circuit intermédiaire possède k condensateurs de circuit intermédiaire et n éléments de réglage de tension continue, avec : k ≥ 2 et n = k - 1.

4. Onduleur selon la revendication 3, **caractérisé en ce que** tous les éléments de réglage de tension continue sont pilotés depuis une unité centrale qui détermine les instructions de pilotage à partir du calcul de toutes les tensions individuelles des condensateurs de circuit intermédiaire qui sont présentes dans le système.

5. Onduleur selon la revendication 3, **caractérisé en ce que** les instructions de pilotage de chaque élément de réglage de tension continue sont déterminées individuellement à partir du potentiel du noeud commun des deux condensateurs de circuit intermédiaire avec lesquels il est en liaison.
